# EUROPÄISCHE PATENTSCHRIFT

(11) **EP 0 827 973 B1**
(45) Veröffentlichungstag und Bekanntmachung des Hinweises auf die Patenterteilung: **22.12.2004**
(21) Anmeldenummer: 97114807.7
(22) Anmeldetag: 27.08.1997
(51) Int. Cl.: C08G 18/28, C09D 11/00, C09D 17/00

(54) **Pigmentpräparationen für den Ink-Jet-Druck**
Pigment preparations for ink-jet printing
Préparations pigmentaires pour l'impression par jet d'encre

(30) Priorität: 09.09.1996 DE 19636382
(43) Veröffentlichungstag der Anmeldung: 11.03.1998
(73) Patentinhaber: Bayer Chemicals AG, 51368 Leverkusen (DE)
(72) Erfinder: Kijlstra, Johan, Dr., 51375 Lweverkusen (DE); Kirchmeyer, Stephan, Dr., 51375 Leverkusen (DE); Nyssen, Peter-Roger, 41542 Dormagen (DE); Pfützenreuter, Dirk, 51377 Leverkusen (DE); Wamprecht, Christian, Dr., 41472 Neuss (DE)

(56) Entgegenhaltungen:
- EP-A- 0 517 043
- EP-A- 0 731 148
- WO-A-93/03070
- DE-A- 2 054 885
- DE-A- 2 903 022

## Beschreibung

Die Erfindung betrifft Pigmentpräparationen, ein Verfahren zu ihrer Herstellung sowie ihre Verwendung als Drucktinten für den Ink-Jet-Druck.

Pigmente enthaltende Drucktinten für den Ink-Jet-Druck sind an sich bekannt. Dabei ist es nicht leicht, Drucktinten, die Pigmentgehalte im allgemeinen von 1 bis 10 Gew.-%, bezogen auf die Tinte, enthalten, gleichzeitig mit den geforderten anwendungstechnischen Eigenschaften auszustatten. Als für den Ink-Jet-Druck zu nennende wichtige anwendungstechnische Eigenschaften der Drucktinten werden beispielsweise eine niedrige Viskosität, eine hohe physikalische Stabilität, gutes Trocknungsverhalten, sowie eine geeignete Oberflächenspannung verstanden. Weiterhin ist die Wasserechtheit von den damit erzeugten Drucken wichtig.

In US-A 4 597 794 werden beispielsweise die Pigmente in den Drucktinten mit polymeren Dispergiermitteln, die aus ionisch hydrophilen und aromatisch hydrophoben Segmenten aufgebaut sind, stabilisiert.

In EP-A 518 225 bzw. EP-A 556 649 werden als Dispergiermittel von Pigmenten in Drucktinten Block-Copolymere auf Acrylbasis vom Typ AB, BAB und ABC beschrieben.

Die bekannten pigmentierten Drucktinten besitzen allerdings noch einige anwendungstechnische Nachteile, insbesondere hinsichtlich ihrer physikalischen Stabilität. Zudem besitzen die damit erzeugten Drucke noch eine unzureichende Wasserechtheit.

Aufgabe der vorliegenden Erfindung war daher die Bereitstellung von Pigmentpräparationen, die die obigen Nachteile nicht mehr aufweisen.

Es wurden nun Pigmentpräparationen gefunden, enthaltend
a) 0,1 bis 70, vorzugsweise 1 bis 50, insbesondere 1 bis 20 Gew.-% Pigment,
b) 10 bis 99 Gew.-% Wasser, jeweils bezogen auf die Präparation und
c) 0,1 bis 100, vorzugsweise 0,5 bis 60 Gew.-%, bezogen auf eingesetztes Pigment der Komponente a) eines wasserlöslichen, hydrophile Polyetherketten aufweisendes Polyisocyanat-Additionsprodukt mit einem Gehalt an Isocyanatgruppen von maximal 1,0 Gew.-% und einen Gehalt an über monofunktionelle Alkohole B) eingebauten, innerhalb von Polyetherketten angeordneten Ethylenoxideinheiten (Mol-Gew. = 44 g/mol) von 30 bis 95 Gew.-% und einen Anteil an ionischen Gruppen von 0 bis 200 Milliäquivalenten / 100 g Polyisocyanat-Additionsprodukt, die durch Umsetzung von
   A) einer Polyisocyanat-Komponente, einer (mittleren) NCO-Funktionalität von 1,7 bis 6 und einem NCO-Gehalt von 5 bis 65 Gew.-%
      mit mindestens einer der folgenden Komponenten
   B) 5 bis 100 Äquivalent-%, bezogen auf die Isocyanatgruppen von A), einer einwertigen Alkoholkomponente, bestehend aus mindestens einem einwertigen Polyetheralkohol des Molekulargewichtsbereiches 150 bis 10.000, vorzugsweise 150 bis 5.000 g/mol mit einem Gehalt an Ethylenoxideinheiten von 40 bis 99,5 Gew.-%, der durch Alkoxylierung eines einwertigen Startermoleküls hergestellt worden ist,
   C) 0 bis 20 Äquivalent-%, bezogen auf die Isocyanatgruppen von A), einer einwertigen Komponente, bestehend aus mindestens einer, von den Alkoholen der Gruppe B) verschiedenen primäre oder eine gegenüber Isocyanat reaktive Gruppe aufweisenden Verbindung des Molekulargewichtsbereiches 32 bis 5.000 g/mol,
   D) 0 bis 50 Äquivalent-%, bezogen auf die Isocyanatgruppen von A), einer Aminokomponente, bestehend aus mindestens einem tertiären Amin des Molekulargewichtsbereiches 88 bis 250 g/mol mit einer gegenüber Isocyanatgruppen im Sinne der NCO-Additionsreaktion reaktionsfähigen Gruppe
      und
   E) 0 bis 20 Äquivalent-%, bezogen auf die Isocyanatgruppen von A), an im Sinne der NCO-Additionsreaktion mindestens difunktionellen Aufbaukomponenten des Molekulargewichtsbereiches 32 bis 3.000 g/mol
   unter Einhaltung einer NCO-Kennzahl von 100 bis 600 unter Urethan- und gegebenenfalls Harnstoffbildung hergestellt worden sind, wobei gegebenefalls im Überschuß vorliegende NCO-Gruppen durch gleichzeitig oder anschließend erfolgende Sekundärreaktionen bis auf einen Restgehalt von maximal 1,0 Gew.-% abreagiert sind.

Pigmentpräparationen mit der Komponente c) sind in der nicht vorveröffentlichten Anmeldung DE-A 19 508 390 angegeben.

Die in den erfindungsgemäßen Pigmentpräparationen enthaltene Komponente c) fungiert als Dispergiermittel und stellt unter Urethan- und gegebenenfalls Harnstoffbildung hergestellte Umsetzungsprodukte von Polyisocyanaten A) mit einwertigen Alkoholen B) und gegebenenfalls weiteren Ausgangskomponenten C), D) und/oder E) dar, die gegebenenfalls gleichzeitig und/oder im Anschluß an die zur Urethan- und gegebenenfalls Harnstoffbildung führende Additionsreaktion durch Sekundärreaktion von gegebenenfalls vorliegenden überschüssigen Isocyanatgruppen befreit worden sind.

Die Komponente c) weist einen Gehalt an über die Komponenten B) eingebauten Ethylenoxideinheiten (Molgew. = 44) von 30 bis 95, vorzugsweise von 40 bis 75 Gew.-% auf. Der Gehalt an freien Isocyanatgruppen liegt unter 1 Gew.-%. Im allgemeinen sind freie Isocyanatgruppen nicht mehr nachweisbar.

Die in den erfindungsgemäßen Pigmentpräparationen enthaltenen Dispergiermittel der Komponente c) enthalten bevorzugt 10 bis 50 Milliäquivalente an ionischen Gruppen / 100 g Komponente c), besonders bevorzugt anionische Gruppen in Form von an das Dispergiermittel gebundene Carboxyl-, Sulfat-, Sulfonat-, Phosphat- und Phosphonatgruppen, die durch z.B. Alkalihydroxide oder Ethanolamin, Di- oder Triethanolamin in die entsprechenden Salze überführt wurden.

Die zur Herstellung der Komponente c) eingesetzte Polyisocyanatkomponente A) weist eine (mittlere) NCO-Funktionalität von 1,7 bis 6,0, vorzugsweise größer als 2,5, insbesondere 3,0 bis 6,0 und einen NCO-Gehalt von 5 bis 65, vorzugsweise 7 bis 30 Gew.-% auf. Vorzugsweise werden Polyisocyanatkomponenten mit einer (mittleren) NCO-Funktionalität von 1,7 bis 2,5 während der Reaktion mit den Komponenten B bis E auf eine Funktionalität von größer als 2,5 durch Modifizierungsreaktionen erhöht.

Die Polyisocyanatkomponente A) besteht aus mindestens einem organischen Polyisocyanat. Geeignete Polyisocyanate sind unmodifizierte Polyisocyanate oder den gemachten Angaben bezüglich NCO-Gehalt und -Funktionalität entsprechende Modifizierungsprodukte der an sich bekannten Polyisocyanate, insbesondere Diisocyanate.

Unmodifizierte Polyisocyanate, die als Komponente A) oder als Teil der Komponente A) geeignet sind, sind beispielsweise die Polyisocyanate der Diphenylmethan-Reihe, wie sie neben den entsprechenden Diisocyanaten bei der Phosgenierung von Anilin/Formaldehyd-Kondensaten anfallen oder aber an sich bekannte höherfunktionelle Polyisocyanate wie beispielsweise 4,4',4"-Trüsocyanato-triphenylmethan.

Im allgemeinen bestehen die Polyisocyanate der Komponente A) jedoch aus den angesprochenen Modifizierungsprodukten einfacher Polyisocyanate. Unter "Modifizierung" ist in diesem Zusammenhang insbesondere die Herstellung von Biuret-, Allophanat- und/oder Isocyanuratgruppen zu verstehen. Zur Herstellung derartiger Derivate einzusetzende Diisocyanate sind beispielsweise Hexamethylendiisocyanat, Cyclohexan-1,3- und -1,4-Diisocyanat sowie beliebige Gemische dieser Isomeren, 1-Isocyanato-3,3,5-trimethyl-5-isocyanatomethyl-cyclohexan, 2,4- und 2,6-Hexahydrotoluylendüsocyanat sowie beliebige Gemische dieser Isomeren, Perhydro-2,4'- und/oder -4,4'-diphenylmethandiisocyanat, 2,4- und 2,6-Toluylendiisocyanat sowie beliebige Gemische dieser Isomeren, Diphenylmethan-2,4'- und/oder -4,4'-diisocyanat und Naphthylen-1,5-diisocyanat.

Besonders bevorzugt werden zur Herstellung der modifizierten Diisocyanate die technisch wichtigen Polyisocyanate verwendet, wie beispielsweise 2,4-Diisocyanatotoluol, dessen technische Gemische mit bis zu 35 Gew.-%, bezogen auf Gemisch, an 2,6-Diisocyanatotoluol, 4,4'-Diisocyanatodiphenylmethan, dessen technischen Gemische mit 2,4'- und 2,2'-Diisocyanatodiphenylmethan, Hexamethylendiisocyanat oder Gemische dieser Diisocyanate. Ganz besonders bevorzugt handelt es sich bei den Polyisocyanaten der Komponente A) um die Isocyanuratgruppen aufweisende Modifizierungsprodukte von 2,4-Diisocyanatotoluol oder dessen technische Gemische mit bis zu 35 Gew.-%, bezogen auf Gemisch, an 2,6-Diisocyanatotoluol. Diese besonders bevorzugten Isocyanuratgruppen aufweisenden Polyisocyanate weisen i.a. einen NCO-Gehalt von 7 bis 30 Gew.-% bei einer NCO-Funktionalität von 3 bis 6 auf. Oftmals wird die Polyisocyanatkomponente A) in Form einer Lösung in einem inerten Lösungsmittel wie beispielsweise Butylacetat eingesetzt.

In einer bevorzugten Ausführungsform werden Polyisocyanate mit einer mittleren Funktionalität von 1,7 bis 2,5 als Komponente A) verwendet, wobei die Modifizierungsreaktionen, d.h. die Bildung von Biuret-, Allophanat- und/oder Isocyanuratgruppen parallel mit bzw. nach der Umsetzung mit den Komponenten B) bis E) erfolgt. Derartige Modifizierungsreaktionen sind dem Fachmann bekannt und z.B. in Houben-Weyl "Methoden der organischen Chemie", Band E20, "Makromolekulare Stoffe" herg. H. Bartl, J. Falbe, G. Thieme Verlag Stuttgart 1987 auf den Seiten 1735, 1736 und 1739 bis 1744 beschrieben.

Die einwertige Alkoholkomponente B) besteht aus mindestens einem einwertigen Alkohol mit einem (aus dem Hydroxylgruppengehalt errechenbaren) Molekular-gewicht von 150 bis 10.000, insbesondere 150 bis 5.000, vorzugsweise 500 bis 3.000 g/mol, der 40 bis 99,5, vorzugsweise 70 bis 99,5 Gew.-%, bezogen auf das Gesamtgewicht des einwertigen Alkohols, an innerhalb einer Polyetherkette eingebauten Ethylenoxideinheiten aufweist.

Als Komponente B) oder als Teil der Komponente B) bevorzugt geeignet sind an sich bekannte Alkoxylierungsprodukte von einwertigen Startermolekülen, die pro Molekül im statistischen Mittel mindestens 3, vorzugsweise 7 bis 250 Alkylenoxideinheiten aufweisen, die ihrerseits zu mindestens 40 Gew.-%, vorzugsweise 70 bis 100 Gew.-% aus Ethylenoxideinheiten, bezogen auf die Alkylenoxideinheit, bestehen.

Zur Herstellung der einwertigen Polyetheralkohole geeignete Startermoleküle sind insbesondere einwertige Alkohole, Phenole oder Carbonsäuren. Die Startermoleküle weisen im allgemeinen 1 bis 30, vorzugsweise 1 bis 10 und besonders bevorzugt 1 bis 4 Kohlenstoffatome auf. Beispielhaft genannt seien Alkohole wie Methanol, Ethanol, i-Propanol, n-Butanol, 1-Pentanol, 1-Hexanol, 1-Octanol, Oleylalkohol oder Benzylalkohol oder Phenole wie beispielsweise Phenol, Kresole, Methylphenole, Nonylphenole oder Dodecylphenole oder alkoxylierbare Säuren wie beispielsweise Essigsäure, Buttersäure, Caprin, Laurin, Palmitin oder Stearinsäure oder auch Cyclohexancarbonsäure. Die bevorzugten Startermoleküle sind einwertige Alkohole mit 1 bis 4 Kohlenstoffatomen der oben beispielhaft genannten Art.

Zur an sich bekannten Alkoxylierungsreaktion werden Ethylenoxid oder Kombinationen aus Ethylenoxid mit bis zu 60, vorzugsweise bis zu 30 Gew.-%, bezogen auf die Gesamtmenge der Alkylenoxide, an anderen Alkylenoxiden wie insbesondere Propylenoxid verwendet. Falls außer Ethylenoxid auch andere Alkylenoxide mitverwendet werden, kann dies unter Verwendung entsprechender Alkylenoxidgemische oder auch unter sukzessiver Addition der Alkylenoxide unter Blockbildung erfolgen.

Die Komponente B) kommt in einer Menge von 5 bis 100, vorzugsweise 50 bis 90 Äquivalent-%, bezogen auf die Isocyanatgruppen der Komponente A) zum Einsatz.

Die gegebenenfalls mitzuverwendende Komponente C) besteht aus mindestens einer anderen, den unter B) gemachten Ausführungen nicht entsprechenden einwertigen Verbindung mit einer gegenüber Isocyanat reaktiven Gruppe. In Betracht kommen insbesondere die bekannten einwertigen Alkohole wie z.B. Methanol, Ethanol, Propanol, iso-Propanol, 1- und 2-Butanol, Isobutanol, 1-Hexanol, 2-Ethyl-1-hexanol etc., darüberhinaus einwertige Esteralkohole des Molekulargewichtsbereiches 94 bis 350 wie beispielsweise Hydroxybuttersäuremethylester, Ethylenglykolmonoacetat, Milchsäurepropylester oder ω-Hydroxycapronsäureethylester oder einwertige Alkohole des Molekulargewichtsbereiches 146 bis 2.000 g/mol, die durch an sich bekannte Anlagerung von ε-Caprolacton an einwertige Alkohole der bereits oben beispielhaft genannten Art erhalten worden sind.

Bevorzugt sind ionische Gruppen-tragende Verbindungen wie Alkali- und Ammoniumsalze von Hydroxyessigsäure, Milchsäure, Glycin, Taurin und N-Methyltaurin.

Die Komponente C) wird in einer Menge von bis zu 20, vorzugsweise bis zu 10 Äquivalent-%, bezogen auf die Isocyanatgruppen der Komponente A) verwendet.

Bei der Komponente D) handelt es sich um organische Verbindungen, die neben mindestens einer tert.-Aminogruppe eine gegenüber Isocyanatgruppen im Sinne der Isocyanat-Additionsreaktion reaktionsfähige Gruppe, insbesondere Hydroxyl- oder Aminogruppe aufweisen. Diese Verbindungen haben im allgemeinen ein Molekulargewicht von 88 bis 250, insbesondere von 88 bis 150 g/mol.

Als Komponente D) bzw. als Teil der Komponente D) kommen beispielsweise Aminoalkohole wie N,N-Diethylethanolamin, N,N-Dimethylethanolamin, N,N-Dimethylisopropanolamin, N,N-Dimethyl-1,3-propandiamin, N,N-Diethylethylendiamin, 2-Dibutylamino-ethanol, 3-(Dimethylamino)-1-propanol, 1-Methylpiperazin, 1-Methyl-4-piperidinol, 2-Morpholinoethanol, 2-Piperidinoethanol, 2-Piperazinoethanol, 2-Piperazinoethylamin, 3-Morpholinopropylamin, N,N-Dibutyl-trimethylendiamin, 3-(Diethylamino)-1-propanol, N-Methyl-3-pyrrolidinol, 2-(Hydroxymethyl)-N-methylpiperidin oder mindestens eine tert.-Aminogruppe und eine primäre oder sekundäre Aminogruppe aufweisende Polyamine in Betracht. Beispiele derartiger Verbindungen sind N,N-Dimethyl-ethylendiamin, N,N-Diethyl-1,4-butandiamin oder N-Methyl-piperazin.

Zu den bevorzugten Verbindungen, die als Komponente D) bzw. als Teil der Komponente D) zum Einsatz gelangen, gehören 4-(2-Hydroxyethyl)-pyridin, 2-Hydroxyethylmorpholin, N,N-Dimethyl-1,3-propandiamin, N,N-Diethyl-1,4-butandiamin und N,N-Dimethylaminoethanol und N,N-Dimethylaminopropylamin.

Die Komponente D) kommt in einer Menge von 0 bis 50, vorzugsweise 10 bis 50 Äquivalent-%, bezogen auf die Isocyanatgruppe der Komponente A) zum Einsatz. Vorzugsweise wird die Komponente D) in einer solchen Menge mitverwendet, daß in den erfindungswesentlichen Additionsprodukten 0 bis 200 und insbesondere 0 bis 100 Milliäquivalente an tert.-Aminogruppen pro 100 g Feststoff vorliegen.

Bei der gegebenenfalls mitzuverwendenden Komponente E) handelt es sich um organische Verbindungen des Molekulargewichtsbereiches 32 bis 3.000, vorzugsweise 118 bis 2.000 g/mol mit zwei gegenüber Isocyanatgruppen reaktionsfähigen Gruppen, insbesondere mit zwei alkoholischen Hydroxylgruppen. Beispielhaft genannt seien insbesondere Polyester- oder Polyetherdiole der an sich bekannten Art des genannten Molekulargewichtsbereiches.

Die Komponente E) wird bei der Herstellung der erfindungswesentlichen Additionsverbindungen, falls überhaupt, in einer Menge von bis zu 20, vorzugsweise bis zu 10 Äquivalent-%, bezogen auf die Isocyanatgruppen der Komponente A) eingesetzt. Besonders bevorzugt wird ohne Mitverwendung der Komponente E) gearbeitet.

Bevorzugte erfindungsgemäße Pigmentpräparationen sind dadurch gekennzeichnet, daß das Polyisocyanat-Additionsprodukt der Komponente c) unter Einhaltung einer NCO-Kennzahl von 100 bis 130 durch Umsetzung von
A) einer Polyisocyanat-Komponente einer mittleren NCO-Funktionalität von 3,0 bis 6 und einem NCO-Gehalt von 7 bis 30 Gew.-%, bestehend aus Isocyanuratgruppen aufweisenden Modifizierungsprodukten von 2,4-Diisocyanatotoluol oder dessen Gemische mit bis zu 35 Gew.-%, bezogen auf das Gemisch, an 2,4-Diisocyanatotoluol,
   mit
B) 50 bis 90 Äquivalent-%, bezogen auf die Komponente A), einer Alkoholkomponente der unter B) genannten Art,
C) 0 bis 20 Äquivalent-%, bezogen auf die Isocyanatgruppen von A), einer einwertigen gegenüber Isocyanat reaktiven Gruppen aufweisenden Verbindung des Molekulargewichtsbereiches 32 bis 5.000 g/mol, die zusätzlich ionische Gruppen enthält,
   und
D) 10 bis 50 Äquivalent-%, bezogen auf die Komponente A), einer Aminkomponente der unter D) genannten Art
unter Urethanbildung und gegebenenfalls gleichzeitig oder im Anschluß an die Urethanbildung durchgeführte Sekundärreaktionen zur Verminderung von gegebenenfalls vorliegenden überschüssigen NCO-Gruppen bis auf einen Restgehalt von maximal 1,0 Gew.-% hergestellt worden ist, wobei die Art und Mengenverhältnisse der Ausgangskomponenten so gewählt werden, daß das Umsetzungsprodukt 40 bis 75 Gew.-% an über die Komponente B) eingebauten Ethylenoxideinheiten aufweiset.

Ebenfalls bevorzugte erfindungsgemäße Pigmentpräparationen sind dadurch gekennzeichnet, daß das Polyisocyanat-Additionsprodukt der Komponente c) unter Einhaltung einer NCO-Kennzahl von 131 bis 600 durch Umsetzung von
A) einer Polyisocyanat-Komponente mit einer mittleren NCO-Funktionalität von 1,7 bis 2,5 und einem NCO-Gehalt von 30 bis 65 Gew.-%, bestehend aus mindestens einem Isocyanurat aus der folgenden Gruppe: 2,4-Diisocyanatotoluol, 2,6-Diisocyanatotoluol, 4,4'-Diisocyanatodiphenylmethan, 2,4'-Diisocyanatodiphenylmethan
   mit
B) 5 bis 50 Äquivalent-%, bezogen auf die Komponente A), einer Alkoholkomponente der unter B) oben genannten Art,
C) 0 bis 10 Äquivalent-%, bezogen auf die Isocyanatgruppen von A), einer einwertigen gegenüber Isocyanat reaktiven Gruppen aufweisenden Verbindung des Molekulargewichtsbereiches 32 bis 5.000 g/mol, die zusätzlich ionische Gruppen enthält,
   und
D) 0 bis 20 Äquivalent-%, bezogen auf die Komponente A), einer Aminkomponente der unter D) oben genannten Art
unter Urethanbildung und gegebenenfalls gleichzeitig oder im Anschluß an die Urethanbildung durchgeführte Sekundärreaktionen zur Verminderung von gegebenenfalls vorliegenden überschüssigen NCO-Gruppen bis auf einen Restgehalt von maximal 1,0 Gew.-% hergestellt worden ist, wobei die Art und Mengenverhältnisse der Ausgangskomponenten so gewählt werden, daß das Umsetzungsprodukt 40 bis 75 Gew.-% an über die Komponente B) eingebauten Ethylenoxideinheiten aufweist.

Besonders bevorzugt sind oben genannte erfindungsgemäße Pigmentpräparationen, dadurch gekennzeichnet, daß das Polyisocyanat-Additionsprodukt der Komponente c) einen Gehalt von 10 bis 50 Milliäquivalenten ionischer Gruppen pro 100 g der Komponente c) enthält.

Bei der Herstellung der erfindungswesentlichen Additionsprodukte aus den beispielhaft genannten Ausgangsmaterialien A) bis E) kann nach unterschiedlichen Methoden gearbeitet werden. Im allgemeinen erfolgt die Umsetzung in der Schmelze bei Temperaturen von 20 bis 250, vorzugsweise 60 bis 140°C. Hierbei kann man beispielsweise so vorgehen, daß man die Isocyanatkomponente A) mit einem Gemisch der Komponente B) und gegebenenfalls C), D) und/oder E) umsetzt oder aber zunächst aus der Komponente A) und einem Teil der Reaktionspartner B) bis E) ein NCO-Prepolymer herstellt, welches anschließend in einer 2. Stufe mit dem Rest der Reaktionspartner mit gegenüber Isocyanatgruppen reaktionsfähigen Gruppen zu Reaktion gebracht wird.

Danach wird der NCO-Überschuß durch Sekundärreaktionen bis auf einen Restgehalt von maximal 1,0 Gew.-%, vorzugsweise von 0,5 Gew.-% und besonders bevorzugt 0 Gew.-% reduziert. Bei diesen Sekundärreaktionen kann es sich beispielsweise um die Bildung von Allophanatgruppen, Biuretgruppen, Uretdiongruppen oder von Isocyanuratgruppen durch entsprechende Additions- bzw. Polymerisationsreaktionen der überschüssigen NCO-Gruppen handeln. Derartige Reaktionen werden oftmals von den vorliegenden tert.-Stickstoffatomen katalysiert und durch 0,1 bis 24-stündiges Erhitzen auf 60 bis 250°C bewirkt. Bevorzugt als Sekundärreaktionen sind Polymerisationsreaktionen bei denen Uretdiongruppen und/oder Isocyanuratgruppen entstehen.

Besonders bevorzugt als Sekundärreaktionen ist die Polymerisation der restlichen NCO-Gruppen unter Ausbildung von Isocyanuratstrukturen, die sich unter Katalyse der gegebenenfalls aus der Komponente D) stammenden tert.-Stickstoffatomen ausbilden oder durch Zugabe von weiteren Trimerisierungskatalysatoren entstehen.

Geeignete Trimerisierungskatalysatoren zur Trimerisierung der überschüssigen NCO-Gruppen bei dem erfindungsgemäßen Verfahren sind alle bislang zur Herstellung von Isocyanuratpolyisocyanaten eingesetzten Verbindungen. Zu nennen sind dabei Oxide, wie z.B. Lithiumoxid oder Bis-[tributylzinn]-oxid; Alkanolate wie, z.B. Natriummethanolat oder Kalium-tert.-butanolat; Phenolate, Hydride, wie z.B. Natriumboranat; Hydroxide, wie z.B. Quartäre Ammonium-, Phosphonium-, Arsonium-, Stibonium-hydroxide oder Kaliumhydroxid/Kronenether; Amine, wie z.B. Triethylamin, Benzyl-dimethylamin, Mannichbasen von Phenolen, Pyrazine oder 1-(2-Hydroxyethyl)-aziridin; Amide, wie z.B. Acrylamide und Carbamidsäureester; Aminimide, wie z.B. N,N-Dimethyl-N-(2-hydroxypropyl)-laurinimid; Phosphane, wie z.B. tert.-Phosphane; Carboxylate, wie z.B. Natriumformiät; Kaliumacetat oder Tetraethylammonium-2-ethylhexanoat; Borate; metallorganische Verbindungen; Metallchelate; Säuren bzw. Lewissäuren, wie z.B. Chlorwasserstoff, Aluminiumchlorid; Friedel-Crafts-Katalysatoren oder Tetramethylammonium-dibutylphosphat. Ferner sind eine Reihe von Stoffkombinatonen, die je für sich allein nur wenig oder nicht wirksam sind, gute Trimerisierungskatalysatoren, wie z.B. Tetramethylammoniumiodid/(Phenoxymethyl)-oxiran, 1,4-Diaza-bicyclo[2,2,2]octan/(Phenoxymethyl)-oxiran oder Cyclohexyl-dimethylamin/Tetramethylammonium-2-ethylhexanoat. Eine ausführliche Übersicht über Katalysatoren für die Trimerisierung von Isocyanatgruppen mit entsprechenden Hinweisen auf die Originalliteratur ist zu finden in Houben-Weyl, Methoden zur organischen Chemie, Band E, 20 (1987), Seiten 1741-1751, Georg Thieme Verlag Stuttgart, New York.

Obwohl die Reaktion, von den geringen Lösungsmitteln, die gegebenenfalls zum Auflösen der Komponente A) eingesetzt werden, abgesehen, vorzugsweise in der Schmelze durchführbar wird, ist es auch möglich, beispielsweise zur Erniedrigung der Viskosität inerte Lösungsmittel mitzuverwenden. Geeignete Lösungsmittel sind beispielsweise Dimethylformamid, N-Methylpyrrolidon, Dimethylacetamid, Aceton, 2-Butanon, Essigsäureethylester, Essigsäurebutylester, Methoxypropylacetat, Toluol oder Gemische derartiger Lösungsmittel. Im allgemeinen werden die Lösungsmittel im Verlauf oder im Anschluß an die Umsetzung, beispielsweise durch Destillation, entfernt.

Gegebenenfalls können auch an sich bekannte, die Isocyanat-Additionsreaktion beschleunigende, Katalysatoren mitverwendet werden. Beispielhaft genannt seien Triethylamin, N,N-Dimethylbenzylamin oder Zinnverbindungen wie beispielsweise Zinn(II)octoat oder Dibutylzinndilaurat.

Zur Einführung von ionischen Gruppen in die Verbindungen der Komponente c) ist es auch möglich, die Polyadditionsverbindungen aus Umsetzung der Komponenten A) bis E) einer weiteren Umsetzung zu unterwerfen.

### Pigmente:

Unter "Pigmente" werden im Rahmen der vorliegenden Erfindung wasserunlösliche Farbmittel verstanden.

Die eingesetzten Pigmente besitzen vorzugsweise eine mittlere Partikelgröße von 0,005 bis 5 µm, insbesondere 0,005 bis 1 µm. Besonders bevorzugt liegt die maximale Einzelpartikelgröße unter 0,5 µm, wodurch gewährleistet ist, daß eine verstopfungsfreie Strömung durch die feinen Düsenbohrungen des Druckkopfes (i.A. 10 bis 50 µm) sowie eine mit dem als Komponente (c) beschriebenen Dispergiermittel ausreichende physikalische Stabilisierung der Pigmentpräparationen über die Benutzungs- und Lagerzeit erhalten wird. Außerdem ist zur Erzielung der maximalen Farbstärke, Brillanz und gegebenenfalls Transparenz des Druckbildes (auf Folien) eine hohe Feinverteilung bei enger Partikeldurchmesserverteilung vorteilhaft.

Die Pigmente können grundsätzlich in Form ihrer trockenen Pulver, Granulate oder wasserfeuchten Preßkuchen eingesetzt werden.

Als Pigmente kommen sowohl anorganische und organische Farbpigmente als auch Ruße in Frage, von denen eine große Zahl beispielsweise aus Color Index, 2. Auflage, bekannt sind.

Insbesondere sind zu nennen saure bis alkalische Ruße aus der Gruppe der Furnace- oder Gas-Ruße sowie chemisch oder physikalisch modifizierte oder nachbehandelte Ruße.

Geeignete anorganische Pigmente sind beispielsweise Zinksulfide, Ultramarin, Eisenoxide, Kobaltblau sowie Chromoxidpigmente. Im weiteren Sinne können u.a. auch Pigmente in Form fein partikulärer Oxide wie Siliziumdioxid, Titandioxid, Nickeloxide, Chromantimontitandioxide, Aluminiumoxid sowie fein partikuläre Metalle wie Kupfer, Eisen oder Aluminium verwendet werden.

Geeignete organische Farbpigmente sind beispielsweise solche der Azo-, Disazo-, Polyazo-, Anthrachinon-, Thioindigoreihe, ferner andere polycyclische Pigmente wie beispielsweise aus der Phthalocyanin-, Chinacridon-, Dioxazin-, Isoindolinon-, Naphthalintetracarbonsäure- und Perylen- und Perylentetracarbonsäurereihe, ferner solche aus der Perinon-, Indigoid-, Thioindigoid- und Diketopyrrolopyrrol-Reihe, sowie Metallkomplex-Pigmente von Azo-, Azomethin- oder Methinfarbstoffen oder verlackte Farbstoffe wie Ca-, Mg-, Al-Lacke von sulfonsäure- und/oder carbonsäuregruppenhaltigen Farbstoffen.

Darüberhinaus können die erfindungsgemäßen Pigmentpräparationen Mischungen verschiedener organischer Pigmente oder organischer und anorganischer Pigmente enthalten.

Die erfindungsgemäßen Pigmentpräparationen können selbstverständlich neben den Komponenten a), b) und c) auch weitere Zusätze enthalten.

Als gegebenenfalls weitere Zusätze kommen für Drucktinten für den ink-jet Druck übliche Zusatzstoffe in Frage.

So können beispielsweise als weitere Komponente d) organische Lösungsmittel zugegen sein. Besonders geeignet sind in Wasser lösliche organische Lösungsmittel. Bevorzugt sind solche, die eine Löslichkeit von größer als 0,5 g/100 g Wasser.

Als geeignete organische Lösungsmittel kommen beispielsweise in Frage:
aliphatische C₁-C₄-Alkohole, wie Methanol, Ethanol, Isopropanol, n-Propanol, n-Butanol, Isobutanol oder tert.-Butanol, aliphatische Ketone, wie Aceton, Methylethylketon, Methylisobutylketon oder Diacetonalkohol, Polyole, wie Ethylenglykol, Propylenglykol, Butylenglykol, Diethylenglykol, Triethylenglykol, Trimethylolpropan, Polyethylenglykol mit einem mittleren Molgewicht von 100 bis 4000, vorzugsweise 400 bis 1500 g/mol oder Glycerin, Monohydroxyether, vorzugsweise Monohydroxyalkylether, besonders bevorzugt Mono-C₁-C₄-alkylglykolether wie Ethylenglykolmonoalkyl-, -monomethyl-, -diethylenglykolmonomethylether oder Diethylenglykolmonoethylether, Diethylenglykolmonobutylether, Dipropylenglykolmonoethylether, Thiodiglykol, Dipropylenglykolmonoethylether, Thiodiglykol, Triethylenglykolmonomethylether oder -monoethylether ferner 2-Pyrrolidon, N-Methyl-2-pyrrolidon, N-Ethyl-pyrrolidon, N-Vinyl-pyrrolidon, 1,3-Dimethyl-imidazolidon, Dimethylacetamid sowie Dimethylformamid.

Es kommen auch Gemische der erwähnten Lösungsmittel in Betracht.

Die Menge des organischen Lösungsmittels beträgt vorzugsweise 1 bis 40, insbesondere 2 bis 20 Gew.-%, bezogen auf die Pigmentpräparationen.

Bevorzugt beträgt die Menge an Wasser und organischem Lösungsmittel 20 bis 99 Gew.-%, vorzugsweise 30 bis 97 Gew.-%, bezogen auf die Pigmentpräparationen.

Weiterhin kann die Pigmentpräparation Mittel zur Einstellung der Viskosität der Tinte enthalten wie beispielsweise Polyvinylalkohol, Polyvinylpyrrolidon, Methylcellulose u.a. dem Fachmann bekannte Mittel, soweit sie die Stabilität der Drucktinte, das Druckverhalten und das Trocknungsverhalten auf Papier nicht negativ beeinflussen.

Zusätzlich zu den genannten Komponenten kann die Drucktinte noch einen Anteil von 0 bis 15 Gew.-%, vorzugsweise 0,5 bis 10 Gew.-%, bezogen auf Tinte eines oberflächenaktiven Mittels enthalten. Diese können grundsätzlich eingesetzt werden z.B. zur Regulierung der Oberflächenspannung der Tinte, ferner zur Verhinderung der Tropfenbildung oder Auslaufens an der Düsenaustrittsfläche des Druckkopfes und zur Einstellung des Benetzungs- und Trocknungsverhaltens der Tinte auf unterschiedliche Substratarten (Papiere). Derartige oberflächenaktive Mittel sind dem Fachmann in Form von am Markt zugänglichen Produkten bekannt. Bei der Auswahl der oberflächenaktiven Mittel dürfen diese nicht die Stabilität der Pigmentpräparation oder die verwendeten Druckkopfmaterialien beeinträchtigen.

Außerdem können die erfindungsgemäßen Pigmentpräparation weitere ionogene als auch nicht-ionogene Hilfsmittel enthalten. Sofern das Polyisocyanat-Additionsprodukt (Komponente c) ionische Gruppen enthält, sollten diese Hilfsmittel vorzugsweise nicht-ionogen oder von gleicher Ionogenität sein.

Grundsätzlich können die Pigmentpräparationen noch Konservierungsmittel, Lichtschutzmittel, weitere Tenside und gegebenenfalls auch pH-Regler enthalten.

Beispiele für pH-Regler sind NaOH, Ammoniak oder Aminomethylpropanol, N,N Dimethylaminomethanol.

Beispiele für Konservierungsmittel sind Methyl- und Chlormethyl-isothiazolin-3-on, Benzisothiazolin-3-on oder Mischungen davon.

Beispiele für Lichtschutzmittel sind UV-Absorbtionsmittel.

Besonders bevorzugt sind Pigmentpräparationen, enthaltend
a) 1 bis 20, insbesondere 1 bis 10 Gew.-% Pigment,
b) 10 bis 98 Gew.-% Wasser, jeweils bezogen auf die Pigmentpräparation,
c) 0,1 bis 100, vorzugsweise 0,5 bis 60 Gew.-%, bezogen auf eingesetztes Pigment der Komponente a) des Polyisocyanat-Additionsproduktes, wie oben genannt und
d) mindestens ein organisches Lösungsmittel aus der Gruppe:
   aliphatische C₁-C₄-Alkohole, wie Methanol, Ethanol, Isopropanol, n-Propanol, n-Butanol, Isobutanol oder tert.-Butanol, aliphatische Ketone, wie Aceton, Methylethylketon, Methylisobutylketon oder Diacetonalkohol, Polyole wie Ethylenglykol, Propylenglykol, Butylenglykol, Diethylenglykol, Triethylenglykol, Trimethylolpropan, Polyethylenglykol mit einem mittleren Molgewicht von 100 bis 4000, vorzugsweise 400 bis 1500 g/mol oder Glycerin, Monohydroxyether, vorzugsweise Monohydroxyalkylether, besonders bevorzugt Mono-C₁-C₄-alkylglykolether wie Ethylenglykolmonoalkyl-, -monomethyl-, -diethylenglykolmonomethylether oder Diethylenglykolmonoethylether, Diethylenglykolmonobutylether, Triethylenglykolmonomethylether oder -monoethylether ferner 2-Pyrrolidon, N-Methyl-2-pyrrolidon, N-Ethyl-pyrrolidon, N-Vinyl-pyrrolidon, 1,3-Dimethyl-imidazolidon, Dimethylacetamid sowie Dimethylformamid.

Die bevorzugte Ausführungsform der einzelnen Komponenten entsprechen den oben angegebenen.

Die Erfindung betrifft weiterhin die Herstellung der erfindungsgemäßen Pigmentpräparationen für den Ink-Jet Druck, die dadurch gekennzeichnet sind, daß man mindestens ein Pigment und mit dem Dispergiermittel der Komponente c) und gegebenenfalls weiteren Zusätzen homogenisiert und naßzerkleinert.

Im allgemeinen wird das Pigment in Pulverform oder in Form des wasserfeuchten Preßkuchens zusammen mit einem Teil des Dispergiermittels und Wasser, vorzugsweise deionisiertem Wasser, zu einer homogenen Mahlsuspension beispielsweise mittels Rührwerksbütte, Dissolver und ähnlichen Aggregaten gegebenenfalls nach einer Vorzerkleinerung angeschlagen.

Die Mahlsuspension kann außerdem Anteile niedrigsiedender Lösungsmittel (Siedepunkt <150°C) enthalten, die im Verlauf der anschließenden Feinmahlung durch Verdampfung ausgetragen werden können. Sie kann aber auch Anteile höhersiedender Lösungsmittel oder weiterer Zusätze wie z.B. Thiodiglykol oder wie sie oben beschrieben sind z.B. Mahlhilfs-, Entschäumungs- oder Benetzungsmittel enthalten.

Die Naßzerkleinerung umfaßt sowohl die Vorzerkleinerung als auch die Feinmahlung. Vorzugsweise liegt die Pigmentkonzentration der Suspension dabei oberhalb der gewünschten Konzentration der fertigen Pigmentpräparation bzw. Drucktinte. Die gewünschte Pigmentendkonzentration wird vorzugsweise im Anschluß an die Naßzerkleinerung eingestellt. Im Anschluß an die Vorzerkleinerung erfolgt eine Mahlung auf die gewünschte Partikelfeinverteilung von 0,001 bis 5 µm, vorzugsweise 0,005 bis 1 µm. Für diese Mahlung kommen Aggregate wie z.B. Kneter, Walzenstühle, Knetschnecken, Kugelmühlen, Rotor-Stator-Mühlen, Dissolver, Korundscheibenmühlen, Schwingmühlen und insbesondere schnelllaufende, kontinuierlich oder diskontinuierlich beschickte Rührwerkskugelmühlen mit Mahlkörpern mit einem Durchmesser von 0,1 bis 2 mm in Frage. Die Mahlkörper können dabei aus Glas, Keramik oder Metall, z.B. Stahl sein. Die Mahltemperatur liegt vorzugsweise im Bereich von 0 bis 250°C, in der Regel jedoch bei Raumtemperatur, insbesondere unterhalb des Trübungspunktes der eingesetzten Dispergiermittel der Komponente c) und gegebenenfalls eingesetzten oberflächenaktiven Mittel.

In einer ebenfalls bevorzugten Verfahrensweise kann die Mahlung teilweise oder vollständig in einem Hochdruckhomogenisator oder in einem sogenannten Strahldispergator (bekannt aus der nicht vorveröffentlichten Anmeldung DE-A 19 536 845) erfolgen, wodurch der Gehalt an Mahlkörperabrieb in der Suspension bzw. die Abgabe von löslichen Stoffen aus den Mahlkörpern (z.B. Ionen aus Glaskörpern) auf ein Minimum reduziert bzw. vollständig vermieden werden kann.

In einem Verdünnungs-Schritt wird die erhaltene Pigmentpräparation in an sich bekannter Weise in Wasser gegebenenfalls mit den restlichen Dispergiermittelmengen und gegebenenfalls weiteren Zusätzen eingemischt und homogenisiert, sowie auf die gewünschte Pigmentendkonzentration bzw. Farbstärke der Präparation bzw. Drucktinte eingestellt. Hierbei kann gegebenenfalls noch ein Teil des Dispergiermittels zugesetzt werden, um beispielsweise eine Reagglomeration feiner Pigmentpartikel in der Verdünnung zu vermeiden.

Von besonderem Vorteil ist ein Verfahren zur Herstellung der Pigmentpräparationen, indem im Mahlschritt zur Herstellung des Pigmentkonzentrates für die Stabilisierung ausreichend Dispergiermittel zur Verfügung gestellt wird. Im Anschluß daran oder nach Verdünnung mit Wasser wird in Lösung befindliches, nicht am Pigment adsorbiertes Dispergiermittel und/oder überschüssige oberflächenaktive Mittel vorzugsweise entfernt und anschließend die gewünschte Pigmentpräparation durch Zugabe der restlichen Anteile der Pigmentpräparation eingestellt wird.

Ein Verfahren zur Entfernung von in Lösung befindlichen Dispergiermitteln ist beispielsweise die Zentrifugation der Suspension und anschließendes Abdekantieren des Überstandes.

Ferner können andere Additive wie z.B. Polyurethan- oder Acrylpolymere zugesetzt werden, um gegebenenfalls die Wasserechtheit weiter zu verbessern. Diese können sowohl wasser-löslicher als auch wasser-emulgierbarer Art sein, oder in einer der in d) enthaltenen Komponenten löslich sein.

In einer bevorzugten Verfahrensweise erfolgt die Mischung und Homogenisierung der Pigmentpräparationen unter Verwendung eines Strahldispergators oder Hochdruckhomogenisators, um die Entstehung von Schaum zu unterbinden und mögliche Reagglomeration zu vermeiden.

Mit der Einstellung der gewünschten Pigmentpräparationen erfolgt auch die Einstellung auf die gewünschte Viskosität, Farbstärke, Farbton, Dichte und Oberflächenspannung der Tinte.

Vor Gebrauch der Pigmentpräparationen als Drucktinten werden die Tinten gegebenenfalls fein-filtriert beispielsweise mittels 1 bis 5 µm Membran- oder Glasfiltern.

Im allgemeinen werden die physikalischen Tinteneigenschaften auf die Verwendung in üblichen Tintenstrahl-Druckern eingestellt, wobei die Oberflächenspannung zwischen 20 und 70 mN/m und die Viskosität kleiner als 20 mPa·s, vorzugsweise 0,5 bis 10 mPa·s betragen sollte.

Die erfindungsgemäßen Pigmentpräparationen liefern, als Drucktinten im Ink-Jet-Druck verwendet, Drucke mit ausgezeichneter Lichtechtheit und besitzen darüber hinaus folgende Vorteile: hervorragende Dispersions- und Lagerstabilität in einem weiten Temperaturbereich; gute Druckbarkeit; hohe Wasser- und Migrationsechtheit der Drucke auf unterschiedlichen Substraten z.B. auf holzfreiem Papier, mittl. Papierqualität, geleimtem und beschichtetem Papier, polymeren Filme, Transparentfolien für Overhead-Projektion; sie sind geeignet für den Mehrfarbendruck, auch bei Verwendung zusammen mit Farbstoff-Tinten oder anderen pigmentierten Tinten.

Im Weiteren wird die Erfindung anhand von Beispielen erläutert, wobei diese jedoch keine Einschränkung der Erfindung bedeuten sollen.

### Beispiel 1 Herstellung eines Dispergiermittels der Komponente c) unter Verwendung eines Diisocyanates und anschließender Sekundärreaktion

216,43 g (0,089 Hydroxyläquivalente) Polyether (Starter: Butyldiglykol, 100 Gew.-% Ethylenoxid, bezogen auf den Alkylenoxidgehalt, Hydroxylzahl 23 mg KOH/g) wurden in einem Dreihalskolben mit mechanischer Rührung und Innenthermometer vorgelegt und 3 h bei 120°C und einem Druck von 10 mbar entwässert. Die Temperatur wurde auf 80°C gesenkt, 33,78 g (0,388 Isocyanatäquivalente) 2,4-Toluylendiisocyanat zugesetzt und nachgerührt, bis titrimetrisch ein Isocyanatgehalt von 5,4 % bestimmt wird. Man gab 3,96 g (0,044 Hydroxyläquivalente) N,N-Dimethylethanolamin zu und rührte nach, bis kein Isocyanat mehr nachweisbar war. Nach Zugabe von 380 ml Wasser wurde auf Raumtemperatur abgekühlt und nachgerührt, bis eine klare Lösung entstanden ist, die als Dispergiermittel verwendet wurde.

### Beispiel 2 Herstellung eines Dispergiermittels der Komponente c) unter Verwendung eines Diisocyanates und anschließender Sekundärreaktion

162,32 g (0,067 Hydroxyläquivalente) des Polyethers aus Beispiel 1 und 50,0 g (0,022 Hydroxyläquivalente) eines zweiten Polyethers (Starter: Butyldiglykol, 15 Gew.-% Propylenoxid 85 Gew.-% Ethylenoxid, jeweils bezogen auf den Alkylenoxidgehalt, Hydroxylzahl 25 mg KOH/g) wurden in einem Dreihalskolben mit mechanischer Rührung und Innenthermometer vorgelegt und 3 h bei 120°C und einem Druck von 10 mbar entwässert. Die Temperatur wurde auf 80°C gesenkt, 33,78 g (0,388 Isocyanatäquivalente) 2,4-Toluylendiisocyanat (Desmodur T 100®, Bayer AG) zugesetzt und nachgerührt, bis titrimetrisch ein Isocyanatgehalt von 5,4 % bestimmt wurde. Man gab 3,96 g (0,044 Hydroxyläquivalente) N,N-Dimethylethanolamin zu und rührt nach, bis kein Isocyanat mehr nachweisbar war. Nach Zugabe von 375 ml Wasser wurde auf Raumtemperatur abgekühlt und nachgerührt, bis eine klare Lösung entstanden war, die als Dispergiermittel verwendet wurde.

### Beispiel 3 Herstellung eines anionisch modifizierten Dispergiermittels der Komponente c) unter Verwendung eines Polyisocyanates

292,17 g (0,12 Hydroxyläquivalente) Polyether aus Beispiel 1 wurden in einem Dreihalskolben mit mechanischer Rührung und Innenthermometer vorgelegt und 3 h bei 120°C und einem Druck von 10 mbar entwässert. Die Temperatur wurde auf 100°C gesenkt, und 111,7 g (0,18 Isocyanatäquivalente) eines polyfunktionellen Isocyanates (Desmodur IL®, Fa. Bayer AG, 51 % in Butylacetat, Funktionalität ca. 3,5 Isocyanatgehalt 15,7 %, bezogen auf Feststoff) zugegeben und 3 h nachgerührt. Während dieser Zeit wurde das Lösungsmittel bei einem Druck von 10 mbar abdestilliert. Anschließend wurde auf 50°C gekühlt, eine Mischung aus 32,2 g (0,06 Aminäquivalente) N-Methyltaurinnatriumsalz (30%ig in Wasser gelöst) und 586 g Wasser zugegeben und nachgerührt bis eine klare Lösung entstanden war, die als Dispergiermittel verwendet wurde.

### Beispiele 4 bis 7 Herstellung erfindungsgemäßer Pigmentpräparationen (Teile = Gewichtsteile, Prozente = Gewichtsprozente)

### Beispiel 4

| | |
|---|---|
| 43,7 Teile | deionisiertes Wasser wurden vorgelegt und |
| 28,1 Teile | der 40%igen wässrigen Lösung des Polyisocyanat-Additionsproduktes, hergestellt nach Beispiel 1, unter Rühren bei Raumtemperatur vollständig darin gelöst. Anschließend wurden |
| 28,1 Teile | des Farbrußes C.I. Pigment Black 7 (Spezial Schwarz® 6, Hersteller Degussa AG, Hanau) eingetragen und mittels eines Dissolvers homogenisiert. Hierbei wurde der pH-Wert der Suspension mittels verdünnter Natronlauge auf 8,0 eingestellt und im Anschluß die Suspension in einer diskontinuierlich betriebenen 1 1-Rührwerkskugelmühle (Fabrikat Sussmeyer, Brüssel) eingebracht. Es erfolgte eine Mahlung mit bleifreien Glasperlen (Durchmesser 0,3 bis 0,4 mm) unter Kühlung über eine Dauer von 3 Stunden. |

Der pH-Wert der Suspension betrug nach Mahlung 5,1. Das so erhaltene wässrige Pigmentkonzentrat wurde mit

| | |
|---|---|
| 0,1 Teilen | eines Konservierungsmittels (Benzisothiazolin-3-on) sowie deionisiertem Wasser auf eine Pigmentkonzentration von 20 Gew.-% eingestellt. |

Die Pigmentpräparation besitzt eine ausgezeichnete Fließfähigkeit und eine einwandfreie Suspensionsstabilität bei Lagerung über 3 Monate bei Raumtemperatur und 50°C. Wässrige Verdünnungen dieser Präparation bis zu einer Pigmentkonzentration von 2 % sind ebenfalls stabil.

Die Zusammensetzung kann Tabelle 1 entnommen werden.

### Beispiel 5

Nach dem gleichen Verfahren wie in Beispiel 4 beschrieben, jedoch unter Verwendung der 40%igen wässrigen Lösung des Polyisocyanat-Additionsproduktes gemäß Beispiel 2 wurde eine schwarze Pigmentpräparation hergestellt mit ebenfalls ausgezeichneten Stabilitäts- und Fließeigenschaften.

Die Zusammensetzung kann Tabelle 1 entnommen werden.

### Beispiel 6

19,4 Teile deionisiertes Wasser wurden vorgelegt und 19,5 Teile der 40%igen wässrigen Lösung des Polyisocyanat-Additionsproduktes hergestellt nach Beispiel 1 unter Rühren bei Raumtemperatur vollständig gelöst. Anschließend wurden 61,0 Teile des Preßkuchens von Color Index Pigment Rot 122 mit einem Trockengehalt von 31,9 % eingetragen, mittels eines Dissolvers vorzerkleinert und homogenisiert. Hierbei wurde der pH-Wert der Suspension mittels verdünnter Natronlauge auf 8,0 gestellt. Im Anschluß erfolgte die Mahlung der Suspension wie in Beispiel 4 beschrieben.

Im Anschluß daran wurde die Mahlsuspension mit deionisiertem Wasser auf eine Pigmentkonzentration von 5 % verdünnt und auf einer Laborzentrifuge (Fabrikat der Fa. Sigma) bei einer Drehzahl von 20.000/1 Minute über eine Zeit von 8 Stunden zentrifugiert. Der weitgehend klare Überstand wurde abdekantiert. Das so erhaltene Konzentrat wurde mit deionisiertem Wasser auf einen Feststoffgehalt von 20 % eingestellt und wie in Beispiel 4 beschrieben konserviert. Die Pigmentpräparation besitzt eine ausreichende Fließfähigkeit und einwandfreie Suspensionsstabilität. Die Zusammensetzung kann Tabelle 1 entnommen werden.

### Beispiel 7

Nach dem gleichen Verfahren wie in Beispiel 6 beschrieben, jedoch ohne den Schritt der Verdünnung und Zentrifugation, sowie unter Verwendung der 40%igen wässrigen Lösung des Polyisocyanat-Additionsprodukt gemäß Beispiel 3, wird eine Magenta-Pigmentpräparation hergestellt mit ebenfalls ausgezeichneten Stabilitäts- und Fließeigenschaften. Die Zusammensetzung kann Tabelle 1 entnommen werden.

**Tabelle 1**

| Beispiel | 4 | 5 | 6 | 7 |
|---|---|---|---|---|
| Deionisiertes Wasser | 60,5 | 57,9 | 59,9 | 53,5 |
| Polyisocyanat-Additionsprodukt (40%ig) gemäß Bsp. 1 | 19,7 | | 20 | |
| Polyisocyanat-Additionsprodukt (40%ig) gemäß Bsp. 2 | | 21 | | |
| Polyisocyanat-Additionsprodukt (40%ig) gemäß Bsp. 3 | | | | 23,2 |
| C.I. Pigment Black 7 | 19,7 | 21 | | |
| C.I. Pigment Rot 122 | | | 20 | 23,2 |
| Konservierungsmittel | 0,1 | 0,1 | 0,1 | 0,1 |
| pH-Wert | 5,1 | 5,8 | 8 | 7,9 |
| max. Teilchengröße (µm)* | < 0,2 | < 0,2 | < 0,2 | < 0,2 |

| | | | | |
|---|---|---|---|---|
| *) Bestimmt aus der Partikelgrößenverteilung (Gewichtsmittel) Meßapparatur: Scheibenzentrifuge Typ DCP® 1000 der Fa. Brookhaven | | | | |

### Anwendungsbeispiele

### Beispiele 8 bis 11

Die Pigmentpräparationen gemäß den Beispielen 4 bis 7 wurden zur Verwendung als Drucktinten für den Ink-Jet-Druck auf eine Pigmentkonzentration von jeweils 4 Gew.-% unter Einsatz von deionisiertem Wasser sowie mit organischen Lösungsmitteln. Die Zusammensetzung der als Drucktinten zu verwendenden Pigmentpräparationen wurden jeweils so gewählt, daß die Viskosität der Drucktinten in einem Bereich von 3 bis 5 mPas liegt.

Die Herstellung erfolgte ausgehend von den Pigmentpräparationen der Beispiele 4 bis 7 durch Mischen und Rühren der erforderlichen Menge an Wasser sowie sonstigen Zusätzen wie organische Lösungsmittel in einem Glasbehälter. Im Anschluß erfolgte eine Ultraschallhornbehandlung über 1 Minute und die Zugabe von Konservierungsmittel und gegebenenfalls pH-Einstellung mittels verdünnter NaOH. Die Zusammensetzung der als Drucktinten verwendeten Pigmentpräparationen geht aus Tabelle 2 hervor.

Diese Pigmentpräparationen wurden vor dem Drucken durch ein 1,2 µm Filter filtriert, um gegebenenfalls vorhandenen Mahlgutabrieb und Grobanteil aus der Suspension zu entfernen.

**Tabelle 2**

| Zusammensetzung und Eigenschaften der als Drucktinten verwendeten Präparationen (Angaben in Gew.-%, bezogen auf die Präparation) | | | | | |
|---|---|---|---|---|---|
| Beispiel | | 8 | 9 | 10 | 11 |
| Deionisiertes Wasser | (%) | 70,1 | 71,4 | 70,4 | 73,2 |
| Polyethylenglykol (Mol-Gew. 400g/mol) | (%) | 4 | 4 | 4 | 4 |
| 2-Pyrrolidon | (%) | 3,9 | 3,9 | 3,9 | 3,9 |
| Isopropanol | (%) | 1,5 | 1,5 | 1,5 | 1,5 |
| Pigmentkonzentrat aus Bsp. 4 | (%) | 20,3 | | | |
| Pigmentkonzentrat aus Bsp. 5 | (%) | | 19 | | |
| Pigmentkonzentrat aus Bsp. 6 | (%) | | | 20 | |
| Pigmentkonzentrat aus Bsp. 7 | (%) | | | | 17,2 |
| Konservierungsmittel | (%) | 0,2 | 0,2 | 0,2 | 0,2 |
| pH-Wert | | 6,5 | 6,7 | 7,5 | 7,3 |
| Oberflächenspannung | (mN/m) | >25 | >25 | >25 | >25 |
| mittl. Teilchengröße (Scheibenzentrifuge) | (µm) | < 0,2 | < 0,2 | < 0,2 | < 0,2 |

### Eigenschaften der als Drucktinten verwendeten Pigmentpräparationen der Beispiele 8 bis 11

Die Drucktinten nach Beispielen 8 bis 11 besitzen eine ausgezeichnete Suspensionsstabilität nach Lagerung bei Raumtemperatur und 50°C über eine Dauer von 3 Monaten. Flockulation oder Reaggregation der Pigmentteilchen wurde nicht beobachtet, die Viskosität der Drucktinten ist unverändert.

Die Drucktinten ließen sich mit handelsüblichen Tintenstrahldruckern einwandfrei drucken. Sie ergaben klare Druckbilder mit hoher Farbstärke, gutem Kontrast und hoher Lichtechtheit.

Zur Überprüfung der Wasserechtheit wurden Drucke auf einem handelsüblichen Tintenstrahldrucker der Fa. Hewlett Packard (HP Deskjet® 1600C) unter Verwendung der Schwarzkatusche in Form einer Balkengraphik auf Normalpapier (AGFA 701® der Fa. Agfa-Gaevert) erstellt.

Die Wasserechtheit wurde mittels eines Tests bestimmt, gemäß dem ein Wassertropfen in unterschiedlichen Zeitabständen nach Erstellung eines Ausdruckes über das erstellte Druckbild ablief; wobei die dabei vom Wasser mitgenommene Farbmittelmenge als Maß für die Wasserechtheit diente.

Die mit den Drucktinten der Beispiele 8 bis 11 erstellten Druckbilder zeigten alle eine ausgezeichnete Wasserechtheit. Gleichsam gut ist die Echtheit der Drucke gegenüber Textmarkern.

## Patentansprüche (Patentansprüche für folgende(n) Vertragsstaat(en): DE, FR, GB, IT)

1. Pigmentpräparationen, enthaltend
a) 0,1 bis 70 Gew.-% Pigment,
b) 10 bis 99 Gew.-% Wasser, jeweils bezogen auf die Präparation,
c) 0,1 bis 100 Gew.-%, bezogen auf eingesetztes Pigment der Komponente a), eines wasserlöslichen, hydrophile Polyetherketten aufweisendes Polyisocyanat-Additionsprodukt mit einem Gehalt an Isocyanatgruppen von maximal 1,0 Gew.-% und einen Gehalt an über monofunktionelle Alkohole B) eingebauten, innerhalb von Polyetherketten angeordneten Ethylenoxideinheiten (Mol-Gew. = 44 g/mol) von 30 bis 95 Gew.-% und einen Anteil an ionischen Gruppen von 0 bis 200 Milliäquivalenten / 100 g Polyisocyanat-Additionsprodukt, die durch Umsetzung von
A) einer Polyisocyanat-Komponente, einer (mittleren) NCO-Funktionalität von 1,7 bis 6 und einem NCO-Gehalt von 5 bis 65 Gew.-%
mit mindestens einer der folgenden Komponenten
B) 5 bis 100 Äquivalent-%, bezogen auf die Isocyanatgruppen von A), einer einwertigen Alkoholkomponente, bestehend aus mindestens einem einwertigen Polyetheralkohol des Molekulargewichtsbereiches 150 bis 10.000 g/mol mit einem Gehalt an Ethylenoxideinheiten von 40 bis 99,5 Gew.-%, der durch Alkoxylierung eines einwertigen Startermoleküls hergestellt worden ist,
C) 0 bis 20 Äquivalent-%, bezogen auf die Isocyanatgruppen von A), einer einwertigen Komponente, bestehend aus mindestens einer, von den Alkoholen der Gruppe B) verschiedenen primäre oder eine gegenüber Isocyanat reaktive Gruppe aufweisenden Verbindung des Molekulargewichtsbereiches 32 bis 5.000 g/mol,
D) 0 bis 50 Äquivalent-%, bezogen auf die Isocyanatgruppen von A), einer Aminokomponente, bestehend aus mindestens einem tertiären Amin des Molekulargewichtsbereiches 88 bis 250 g/mol mit einer gegenüber Isocyanatgruppen im Sinne der NCO-Additionsreaktion reaktionsfähigen Gruppe
und
E) 0 bis 20 Äquivalent-%, bezogen auf die Isocyanatgruppen von A), an im Sinne der NCO-Additionsreaktion mindestens difunktionellen Aufbaukomponenten des Molekulargewichtsbereiches 32 bis 3.000 g/mol
unter Einhaltung einer NCO-Kennzahl von 100 bis 600 unter Urethan- und gegebenenfalls Harnstoffbildung hergestellt worden sind, wobei gegebenenfalls im Überschuss vorliegende NCO-Gruppen durch gleichzeitig oder anschließend erfolgende Sekundärreaktionen bis auf einen Restgehalt von maximal 1,0 Gew.-% abreagiert sind, und
d) ein organisches Lösungsmittel
mit der Maßgabe, dass Präparationen ausgenommen sind, die Russ als einziges Pigment und Polypropylenglykol als einziges Lösungsmittel enthalten.

2. Pigmentpräparation gemäß Anspruch 1, **dadurch gekennzeichnet, dass** das Polyisocyanat-Additionsprodukt unter Einhaltung einer NCO-Kennzahl von 100 bis 130 durch Umsetzung von
A) einer Polyisocyanat-Komponente einer mittleren NCO-Funktionalität von 3,0 bis 6 und einem NCO-Gehalt von 7 bis 30 Gew.-%, bestehend aus Isocyanuratgruppen aufweisenden Modifizierungsprodukten von 2,4-Diisocyanatotoluol oder dessen Gemische mit bis zu 35 Gew.-%, bezogen auf das Gemisch, an 2,4-Diisocyanatotoluol,
mit
B) 50 bis 90 Äquivalent-%, bezogen auf die Komponente A), einer Alkoholkomponente der unter B) in Anspruch 1 genannten Art,
C) 0 bis 20 Äquivalent-%, bezogen auf die Isocyanatgruppen von A), einer einwertigen gegenüber Isocyanat reaktiven Gruppen aufweisenden Verbindung des Molekulargewichtsbereiches 32 bis 5.000 g/mol, die zusätzlich ionische Gruppen enthält,
und
D) 10 bis 50 Äquivalent-%, bezogen auf die Komponente A), einer Aminkomponente der unter D) in A1 genannten Art
unter Urethanbildung und gegebenenfalls gleichzeitig oder im Anschluss an die Urethanbildung durchgeführte Sekundärreaktionen zur Verminderung von gegebenenfalls vorliegenden überschüssigen NCO-Gruppen bis auf einen Restgehalt von maximal 1,0 Gew.-% hergestellt worden ist, wobei die Art und Mengenverhältnisse der Ausgangskomponenten so gewählt werden, dass das Umsetzungsprodukt 40 bis 75 Gew.-% an über die Komponente B) eingebauten Ethylenoxideinheiten aufweist.

3. Pigmentpräparationen gemäß Anspruch 1, **dadurch gekennzeichnet, dass** das Polyisocyanat-Additionsprodukt der Komponente C) unter Einhaltung einer NCO-Kennzahl von 131 bis 600 durch Umsetzung von
A) einer Polyisocyanat-Komponente mit einer mittleren NCO-Funktionalität von 1,7 bis 2,5 und einem NCO-Gehalt von 30 bis 65 Gew.-%, bestehend aus mindestens einem Isocyanurat aus der folgenden Gruppe: 2,4-Diisocyanatotoluol, 2,6-Diisocyanatotoluol, 4,4'-Diisocyanatodiphenylmethan, 2,4'-Diisocyanatodiphenytmethan
mit
B) 5 bis 50 Äquivalent-%, bezogen auf die Komponente A), einer Alkoholkomponente der unter B) in A1 genannten Art
C) 0 bis 10 Äquivalent-%, bezogen auf die Isocyanatgruppen von A), einer einwertigen gegenüber Isocyanat reaktiven Gruppen aufweisenden Verbindung des Molekulargewichtsbereiches 32 bis 5.000 g/mol, die zusätzlich ionische Gruppen enthält,
und
D) 0 bis 20 Äquivalent-%, bezogen auf die Komponente A), einer Aminkomponente der unter D) in A1 genannten Art
unter Urethanbildung und gegebenenfalls gleichzeitig oder im Anschluss an die Urethanbildung durchgeführte Sekundärreaktionen zur Verminderung von gegebenenfalls vorliegenden überschüssigen NCO-Gruppen bis auf einen Restgehalt von maximal 1,0 Gew.-% hergestellt worden ist, wobei die Art und Mengenverhältnisse der Ausgangskomponenten so gewählt werden, dass das Umsetzungsprodukt 40 bis 75 Gew.-% an über die Komponente B) eingebauten Ethylenoxideinheiten aufweist.

4. Pigmentpräparationen gemäß Anspruch 1, **dadurch gekennzeichnet, dass** das Polyisocyanat-Additionsprodukt der Komponente c) einen Gehalt von 10 bis 50 Milliäquivalenten ionischer Gruppen pro 100 g der Komponente c) enthält.

5. Pigmentpräparationen gemäß Anspruch 1, enthaltend
a) 1 bis 20, insbesondere 1 bis 10 Gew.-% Pigment,
b) 10 bis 98 Gew.-% Wasser, jeweils bezogen auf die Pigmentpräparation,
c) 0,1 bis 100, vorzugsweise 0,5 bis 60 Gew.-%, bezogen auf eingesetztes Pigment der Komponente a), des Polyisocyanat-Additionsproduktes, und
d) mindestens ein organisches Lösungsmittel aus der Gruppe:
aliphatische C₁-C₄-Alkohole, wie Methanol, Ethanol, Isopropanol, n-Propanol, n-Butanol, Isobutanol oder tert.-Butanol, aliphatische Ketone, wie Aceton, Methylethylketon, Methylisobutylketon oder Diacetonalkohol, Polyole wie Ethylenglykol, Propylenglykol, Butylenglykol, Diethylenglykol, Trethylenglykol, Polyethylenglykol mit einem mittleren Molgewicht von 100 bis 4000, vorzugsweise 400 bis 1500 g/mol oder Glycerin, Monohydroxyether, vorzugsweise Monohydroxyalkylether, besonders bevorzugt Mono-C₁-C₄-alkylglykolether wie Ethylenglykolmonoalkyl-, -monomethyl-, -diethylenglykolmonomethylether oder Diethylenglykolmonoethylether, Diethylenglykolmonobutylether, Triethylenglykolmonomethylether oder -monoethylether ferner 2-Pyrrolidon, N-Methyl-2-pyrrolidon, N-Ethyl-pyrrolidon, N-Vinyl-pyrrolidon, 1,3-Dimethyl-imidazolidon, Dimethylacetamid sowie Dimethylformamid.

6. Verwendung der Pigmentpräparationen gemäß Anspruch 1 als Drucktinte für den Ink-Jet-Druck.

## Patentansprüche (Patentansprüche für folgende(n) Vertragsstaat(en): CH, LI)

1. Pigmentpräparationen, enthaltend
a) 0,1 bis 70 Gew.% Pigment,
b) 10 bis 99 Gew.-% Wasser, jeweils bezogen auf die Präparation,
c) 0,1 bis 100 Gew.-%, bezogen auf eingesetztes Pigment der Komponente a), eines wasserlöslichen, hydrophile Polyetherketten aufweisendes Polyisocyanat-Additionsprodukt mit einem Gehalt an Isocyanatgruppen von maximal 1,0 Gew.-% und einen Gehalt an über monofunktionelle Alkohole B) eingebauten, innerhalb von Polyetherketten angeordneten Ethylenoxideinheiten (Mol-Gew. = 44 g/mol) von 30 bis 95 Gew.-% und einen Anteil an ionischen Gruppen von 0 bis 200 Milliäquivalenten / 100 g Polyisocyanat-Additionsprodukt, die durch Umsetzung von
A) einer Polyisocyanat-Komponente, einer (mittleren) NCO-Funktionalität von 1,7 bis 6 und einem NCO-Gehalt von 5 bis 65 Gew.-%
mit mindestens einer der folgenden Komponenten
B) 5 bis 100 Äquivalent-%, bezogen auf die Isocyanatgruppen von A), einer einwertigen Alkoholkomponente, bestehend aus mindestens einem einwertigen Polyetheralkohol des Molekulargewichtsbereiches 150 bis 10.000 g/mol mit einem Gehalt an Ethylenoxideinheiten von 40 bis 99,5 Gew.-%, der durch Alkoxylierung eines einwertigen Startermoleküls hergestellt worden ist,
C) 0 bis 20 Äquivalent-%, bezogen auf die Isocyanatgruppen von A), einer einwertigen Komponente, bestehend aus mindestens einer, von den Alkoholen der Gruppe B) verschiedenen primäre oder eine gegenüber Isocyanat reaktive Gruppe aufweisenden Verbindung des Molekulargewichtsbereiches 32 bis 5.000 g/mol,
D) 0 bis 50 Äquivalent-%, bezogen auf die Isocyanatgruppen von A), einer Aminokomponente, bestehend aus mindestens einem tertiären Amin des Molekulargewichtsbereiches 88 bis 250 g/mol mit einer gegenüber Isocyanatgruppen im Sinne der NCO-Additionsreaktion reaktionsfähigen Gruppe
und
E) 0 bis 20 Äquivalent-%, bezogen auf die Isocyanatgruppen von A), an im Sinne der NCO-Additionsreaktion mindestens difunktionellen Aufbaukomponenten des Molekulargewichtsbereiches 32 bis 3.000 g/mol
unter Einhaltung einer NCO-Kennzahl von 100 bis 600 unter Urethanund gegebenenfalls Harnstoffbildung hergestellt worden sind, wobei gegebenenfalls im Überschuss vorliegende NCO-Gruppen durch gleichzeitig oder anschließend erfolgende Sekundärreaktionen bis auf einen Restgehalt von maximal 1,0 Gew.% abreagiert sind.

2. Pigmentpräparation gemäß Anspruch 1, **dadurch gekennzeichnet, dass** das Polyisocyanat-Additionsprodukt unter Einhaltung einer NCO-Kennzahl von 100 bis 130 durch Umsetzung von
A) einer Polyisocyanat-Komponente einer mittleren NCO-Funktionalität von 3,0 bis 6 und einem NCO-Gehalt von 7 bis 30 Gew.%, bestehend aus Isocyanuratgruppen aufweisenden Modifizierungsprodukten von 2,4-Diisocyanatotoluol oder dessen Gemische mit bis zu 35 Gew.%, bezogen auf das Gemisch, an 2,4-Diisocyanatotoluol,
mit
B) 50 bis 90 Äquivalent-%, bezogen auf die Komponente A), einer Alkoholkomponente der unter B) in Anspruch 1 genannten Art,
C) 0 bis 20 Äquivalent-%, bezogen auf die Isocyanatgruppen von A), einer einwertigen gegenüber Isocyanat reaktiven Gruppen aufweisenden Verbindung des Molekulargewichtsbereiches 32 bis 5.000 g/mol, die zusätzlich ionische Gruppen enthält,
und
D) 10 bis 50 Äquivalent-%, bezogen auf die Komponente A), einer Aminkomponente der unter D) in A1 genannten Art
unter Urethanbildung und gegebenenfalls gleichzeitig oder im Anschluss an die Urethanbildung durchgeführte Sekundärreaktionen zur Verminderung von gegebenenfalls vorliegenden überschüssigen NCO-Gruppen bis auf einen Restgehalt von maximal 1,0 Gew.-% hergestellt worden ist, wobei die Art und Mengenverhältnisse der Ausgangskomponenten so gewählt werden, dass das Umsetzungsprodukt 40 bis 75 Gew.-% an über die Komponente B) eingebauten Ethylenoxideinheiten aufweist.

3. Pigmentpräparationen gemäß Anspruch 1, **dadurch gekennzeichnet, dass** das Polyisocyanat-Additionsprodukt der Komponente C) unter Einhaltung einer NCO-Kennzahl von 131 bis 600 durch Umsetzung von
A) einer Polyisocyanat-Komponente mit einer mittleren NCO-Funktionalität von 1,7 bis 2,5 und einem NCO-Gehalt von 30 bis 65 Gew.-%, bestehend aus mindestens einem Isocyanurat aus der folgenden Gruppe: 2,4-Diisocyanatotoluol, 2,6-Diisocyanatotoluol, 4,4'-Diisocyanatodiphenylmethan, 2,4'-Diisocyanatodiphenylmethan
mit
B) 5 bis 50 Äquivalent-%, bezogen auf die Komponente A), einer Alkoholkomponente der unter B) in A1 genannten Art,
C) 0 bis 10 Äquivalent-%, bezogen auf die Isocyanatgruppen von A), einer einwertigen gegenüber Isocyanat reaktiven Gruppen aufweisenden Verbindung des Molekulargewichtsbereiches, 32 bis 5.000 g/mol, die zusätzlich ionische Gruppen enthält,
und
D) 0 bis 20 Äquivalent-%, bezogen auf die Komponente A), einer Aminkomponente der unter D) in A1 genannten Art
unter Urethanbildung und gegebenenfalls gleichzeitig oder im Anschluss an die Urethanbildung durchgeführte Sekundärreaktionen zur Verminderung von gegebenenfalls vorliegenden überschüssigen NCO-Gruppen bis auf einen Restgehalt von maximal 1,0 Gew.-% hergestellt worden ist, wobei die Art und Mengenverhältnisse der Ausgangskomponenten so gewählt werden, dass das Umsetzungsprodukt 40 bis 75 Gew.-% an über die Komponente B) eingebauten Ethylenoxideinheiten aufweist.

4. Pigmentpräparationen gemäß Anspruch 1, **dadurch gekennzeichnet, dass** das Polyisocyanat-Additionsprodukt der Komponente c) einen Gehalt von 10 bis 50 Milliäquivalenten ionischer Gruppen pro 100 g der Komponente c) enthält.

5. Pigmentpräparationen gemäß Anspruch 1, enthaltend
a) 1 bis 20, insbesondere 1 bis 10 Gew.-% Pigment,
b) 10 bis 98 Gew.-% Wasser, jeweils bezogen auf die Pigmentpräparation,
c) 0,1 bis 100, vorzugsweise 0,5 bis 60 Gew.-%, bezogen auf eingesetztes Pigment der Komponente a), des Polyisocyanat-Additionsproduktes, und
d) mindestens ein örganisches Lösungsmittel aus der Gruppe:
aliphatische C₁-C₄-Alkohole, wie Methanol, Ethanol, Isopropanol, n-Propanol, n-Butanol, Isobutanol oder tert.-Butanol, aliphatische Ketone, wie Aceton, Methylethylketon, Methylisobutylketon oder Diacetonalkohol, Polyole wie Ethylenglykol, Propylenglykol, Butylenglykol, Diethylenglykol, Trethylenglykol, Polyethylenglykol mit einem mittleren Molgewicht von 100 bis 4000, vorzugsweise 400 bis 1500 g/mol oder Glycerin, Monohydroxyether, vorzugsweise Monohydroxyalkylether, besonders bevorzugt Mono-C₁-C₄-alkylglykolether wie Ethylenglykolmonoalkyl-, -monomethyl-, -diethylenglykolmonomethylether oder Diethylenglykolmonoethylether, Diethylenglykolmonobutylether, Triethylenglykolmonomethylether oder -monoethylether ferner 2-Pyrrolidon, N-Methyl-2-pyrrolidon, N-Ethyl-pyrrolidon, N-Vinyl-pyrrolidon, 1,3-Dimethyl-imidazolidon, Dimethylacetamid sowie Dimethylformamid,

6. Verwendung der Pigmentpräparationen gemäß Anspruch 1 als Drucktinte für den Ink-Jet-Druck.

## Claims (Claims for the following Contracting State(s): CH, LI)

1. Pigment preparations comprising
a) 0.1 to 70% by weight of pigment,
b) 10 to 99% by weight of water, each based on the preparation, and
c) 0.1 to 100% by weight, based on pigment used as component a), of a watersoluble polyisocyanate addition product, said polyisocyanate addition product having hydrophilic polyether chains and an isocyanate group content of not more than 1.0% by weight, containing 30 to 95% by weight of ethylene oxide units (molecular weight = 44 g/mol) arranged within polyether chains and incorporated via monofunctional alcohols B), having an ionic group content of 0 to 200 milliequivalents/100 g of polyisocyanate addition product, and having been prepared by reaction of
A) a polyisocyanate component of an (average) NCO functionality of 1.7 to 6 and an NCO content of 5 to 65% by weight
with at least one of the following components:
B) 5 to 100 equivalent %, based on the isocyanate groups of A), of a monohydric alcohol component consisting of at least one monohydric polyether alcohol of the molecular weight range 150 to 10,000 g/mol with an ethylene oxide unit content of 40 to 99.5% by weight, the polyether alcohol having been prepared by alkoxylation of a monofunctional initiator molecule,
C) 0 to 20 equivalent %, based on the isocyanate groups of A), of a monofunctional component consisting of at least one compound of the molecular weight range 31 to 5,000 g/mol which has an isocyanate-reactive group and is different from the alcohols of group B),
D) 0 to 50 equivalent %, based on the isocyanate groups of A), of an amino component consisting of at least one tertiary amine of the molecular weight range 88 to 250 g/mol with a group which is reactive towards isocyanate groups for the purposes of the NCO addition reaction,
and
E) 0 to 20 equivalent %, based on the isocyanate groups of A), of formative components of the molecular weight range 32 to 3,000 g/mol which are at least difunctional for the purposes of the NCO addition reaction,
with urethane and optionally urea formation while complying with an NCO number of 100 to 600, any excess NCO groups having reacted in simultaneous or subsequent secondary reactions down to a residual content of not more than 1.0% by weight.

2. Pigment preparation according to Claim 1, **characterized in that** the polyisocyanate addition product has been prepared with an NCO number of 100 to 130 by reaction of
A) a polyisocyanate component having an average NCO functionality of 3.0 to 6 and an NCO content of 7 to 30% by weight, based on isocyanurate-functional modification products of 2,4-diisocyanato-toluene or its mixtures with up to 35% by weight, based on the mixture, of 2,6-diisocyanatotoluene,
with
B) 50 to 90 equivalent %, based on component A), of an alcohol component of the type mentioned under B) in Claim 1,
C) 0 to 20 equivalent %, based on the isocyanate groups of A), of a monofunctional compound of the molecular weight range 30 to 5,000 g/mol which has isocyanate-reactive groups and additionally contains ionic groups,
and
D)10 to 50 equivalent %, based on component A), of an amine component of the type mentioned under D) in Claim 1
with urethane formation and optional simultaneous or subsequent (subsequent to the urethane formation) secondary reactions to reduce the level of any excess NCO groups present down to a residual content of not more than 1.0% by weight, the type and mixing ratios of the starting components being chosen so that the reaction product has 40 to 75% by weight of ethylene oxide units incorporated via component B).

3. Pigment preparations according to Claim 1, **characterized in that** the polyisocyanate addition product of component c) has been prepared with an NCO number of 131 to 600 by reaction of
A) a polyisocyanate component having an average NCO functionality of 1.7 to 2.5 and an NCO content of 30 to 65% by weight, consisting of at least one isocyanurate from the following group: 2,4-diisocyanatotoluene, 2,6-diisocyanatotoluene, 4,4'-diisocyanato-diphenylmethane, 2,4'-diisocyanatodiphenylmethane
with
B) 5 to 50 equivalent %, based on component A), of an alcohol component of the type mentioned under B) in Claim 1,
C) 0 to 10 equivalent %, based on the isocyanate groups of A), of a monofunctional compound of the molecular weight range 32 to 5,000 g/mol which has isocyanate-reactive groups and additionally contains ionic groups,
and
D) 0 to 20 equivalent %, based on component A), of an amine component of the type mentioned under D) in Claim 1
with urethane formation and optional simultaneous or subsequent (subsequent to the urethane formation) secondary reactions to reduce the level of any excess NCO groups present down to a residual content of not more than 1.0% by weight, the type and mixing ratios of the starting components being chosen so that the reaction product has 40 to 75% by weight of ethylene oxide units incorporated via component B).

4. Pigment preparations according to Claim 1, **characterized in that** the polyisocyanate addition product of component c) contains 10 to 50 milliequivalents of ionic groups per 100 g of component c).

5. Pigment preparations according to Claim 1, comprising
a) 1 to 20, especially 1 to 10, % by weight of pigment,
b) 10 to 98% by weight of water, each based on the pigment preparation,
c) 0.1 to 100, preferably 0.5 to 60, % by weight, based on pigment used as component a), of the polyisocyanate addition product, and
d) at least one organic solvent from the group:
aliphatic C₁-C₄-alcohols, such as methanol, ethanol, isopropanol, n-propanol, n-butanol, isobutanol or tert-butanol, aliphatic ketones, such as acetone, methyl ethyl ketone, methyl isobutyl ketone or diacetone alcohol, polyols such as ethylene glycol, propylene glycol, butylene glycol, diethylene glycol, triethylene glycol, polyethylene glycol having an average molecular weight of 100 to 4000, preferably 400 to 1500, g/mol or glycerol, monohydroxyethers, preferably monohydroxyalkyl ethers, particularly preferably mono-C₁-C₄-alkyl glycol ethers such as ethylene glycol monoalkyl, monomethyl, diethylene glycol monomethyl ether or diethylene glycol monoethyl ether, diethylene glycol monobutyl ether, triethylene glycol monomethyl ether or monoethyl ether, also 2-pyrrolidone, N-methyl-2-pyrrolidone, N-ethylpyrrolidone, N-vinylpyrrolidone, 1,3-dimethylimidazolidone, dimethylacetamide and also dimethylformamide.

6. Use of the pigment preparations of Claim 1 as printing ink for inkjet printing.

## Revendications (Revendications pour l'(les) Etat(s) contractant(s) suivant(s): DE, FR, GB, IT)

1. Compositions pigmentaires contenant
a) 0,1 à 70 % en poids d'un pigment,
b) 10 à 99 % en poids d'eau, dans les deux cas sur la composition totale,
c) 0,1 à 100 % en poids, par rapport au pigment mis en oeuvre pour le composant a), d'un produit d'addition de polyisocyanate soluble dans l'eau, contenant des chaînes de polyéther hydrophiles, à une teneur en groupes isocyanate de 1,0 % en poids au maximum et une teneur en motifs d'oxyde d'éthylène (poids équivalent = 44 g/mol) disposés à l'intérieur des chaînes de polyéther et introduits par les alcools monofonctionnels B), de 30 à 95 % en poids et une teneur en groupes ioniques de 0 à 200 milliéquivalents pour 100 g du produit d'addition de polyisocyanate, qui a été obtenu par réaction de
A) un composant polyisocyanate à une fonctionnalité (moyenne) en groupes NCO de 1,7 à 6 et une teneur en groupes NCO de 5 à 65 % en poids
avec au moins un des composants suivants
B) 5 à 100 équivalents %, par rapport aux groupes isocyanate de A), d'un composant alcool monovalent consistant en au moins un polyéther-alcool monovalent de poids moléculaire 150 à 10 000 g/mol à une teneur en motifs d'oxyde d'éthylène de 40 à 99,5 % en poids, qui a été préparé par alcoxylation d'une molécule de départ monovalente,
C) 0 à 20 équivalents %, par rapport aux groupes isocyanate de A), d'un composant monovalent consistant en au moins un composé primaire différent des alcools du groupe B) ou contenant un groupe réactif à l'égard des isocyanates, à un poids moléculaire de 32 à 5 000 g/mol,
D) 0 à 50 équivalents %, par rapport aux groupes isocyanate de A), d'un composant aminé consistant en au moins une amine tertiaire de poids moléculaire 88 à 250 g/mol et contenant un groupe réactif avec les groupes isocyanate dans une réaction d'addition des groupes NCO
et
E) 0 à 20 équivalents %, par rapport aux groupes isocyanate de A), de composants de synthèse au moins difonctionnels dans la réaction d'addition des groupes NCO, à un poids moléculaire de 32 à 3 000 g/mol
en respectant un indice de NCO de 100 à 600, avec formation d'uréthanes et le cas échéant d'urées,
les groupes NCO éventuellement présents en excès étant éliminés jusqu'à une teneur résiduelle de 1,0 % en poids au maximum par des réactions secondaires simultanées ou subséquentes, et
d) un solvant organique
à l'exclusion des compositions qui contiennent du noir de carbone en tant qu'unique pigment et un polypropylèneglycol en tant qu'unique solvant.

2. Composition pigmentaire selon la revendication 1, **caractérisée en ce que** le produit d'addition de polyisocyanate a été préparé, en respectant un indice de NCO de 100 à 130, par réaction de
A) un composant polyisocyanate à une fonctionnalité moyenne en groupes NCO de 3,0 à 6 et une teneur en groupes NCO de 7 à 30 % en poids, consistant en produits de modification, portant des groupes isocyanurate, du 2,4-diisocyanatotoluène ou de ses mélanges avec des proportions allant jusqu'à 35 % du poids du mélange total, de 2,4-diisocyanatotoluène,
avec
B) 50 à 90 équivalents %, par rapport au composant A), d'un composant alcool du type spécifié sous B) dans la revendication 1,
C) 0 à 20 équivalents %, par rapport aux groupes isocyanate de A), d'un composé monovalent portant des groupes réactifs avec les isocyanates, à un poids moléculaire de 32 à 5 000 g/mol, et qui contient en outre des groupes ioniques,
et
D) 10 à 50 équivalents %, par rapport au composant A), d'un composant aminé du type mentionné sous D) dans la revendication 1,
avec formation d'uréthane et le cas échéant des réactions secondaires simultanées à la formation d'uréthane ou succédant à la formation d'uréthane, en vue d'abaisser la teneur en groupes NCO éventuellement en excès jusqu'à une teneur résiduelle de 1,0 % en poids au maximum, la nature et les proportions des composants de départ ayant été choisies en sorte que le produit de réaction contienne de 40 à 75 % en poids de motifs d'oxyde d'éthylène incorporés par le composant B).

3. Composition pigmentaire selon la revendication 1, **caractérisée en ce que** le produit d'addition de polyisocyanate du composant C) a été préparé, en respectant un indice de NCO de 131 à 600, par réaction de
A) un composant polyisocyanate à une fonctionnalité moyenne en groupes NCO de 1,7 à 2,5 et une teneur en groupes NCO de 30 à 65 % en poids, qui consiste en au moins un isocyanurate des isocyanates du groupe suivant : 2,4-diisocyanatotoluène, 2,6-diisocyanatotoluène, 4,4'-diisocyanatodiphénytméthane, 2,4'-diisocyanatodiphénylméthane
avec
B) 5 à 50 équivalents %, par rapport au composant A), d'un composant alcool du type spécifié sous B) dans la revendication 1,
C) 0 à 10 équivalents %, par rapport aux groupes isocyanate de A), d'un composé monovalent, contenant des groupes réactifs avec les isocyanates, à un poids moléculaire de 32 à 5 000 g/mol et qui contient en outre des groupes ioniques,
et
D) 0 à 20 équivalents %, par rapport au composant A), d'un composant aminé du type mentionné sous D) dans la revendication 1
avec formation d'uréthane et le cas échéant des réactions secondaires simultanées ou succédant à la formation d'uréthane en vue d'abaisser la teneur en groupes NCO éventuellement présents en excès jusqu'à une teneur résiduelle de 1,0 % en poids au maximum, la nature et les proportions des composants de départ ayant été choisies en sorte que le produit de réaction contienne de 40 à 75 % en poids de motifs d'oxyde d'éthylène apportés par le composant B).

4. Compositions pigmentaires selon la revendication 1, **caractérisées en ce que** le produit d'addition de polyisocyanate du composant c) contient 10 à 50 milliéquivalents de groupes ioniques pour 100 g du composant c).

5. Compositions pigmentaires selon la revendication 1, contenant
a) 1 à 20, plus spécialement 1 à 10 % en poids de pigment,
b) 10 à 98 % en poids d'eau, dans les deux cas sur la composition pigmentaire totale,
c) 0,1 à 100, de préférence 0,5 à 60 % en poids, par rapport au pigment mis en oeuvre pour le composant a), du produit d'addition de polyisocyanate et,
d) au moins un solvant organique du groupe suivant :
les alcools aliphatiques en C₁ à C₄ tels que le méthanol, l'éthanol, l'isopropanol, le n-propanol, le n-butanol, l'isobutanol ou le tert-butanol, les cétones aliphatiques comme l'acétone, la méthyléthylcétone, la méthylisobutylcétone ou le diacétone-alcool, des polyols comme l'éthylèneglycol, le propylèneglycol, le butylèneglycol, le diéthylèneglycol, le triéthylèneglycol, un polyéthylèneglycol de poids moléculaire moyen 100 à 4 000, de préférence 400 à 1 500 g/mol ou le glycérol, les monohydroxyéthers, de préférence les éthers monohydroxyalkyliques, et tout spécialement les éthers monoalkyliques en C₁-C₄ de glycols comme les éthers monoalkyliques de l'éthylèneglycol, l'éther monométhylique de l'éthylèneglycol, l'éther monométhylique de diéthylèneglycol ou l'éther monoéthylique de diéthylèneglycol, l'éther monobutylique de diéthylèneglycol, l'éther monométhylique de triéthylèneglyco) ou l'éther monoéthylique de triéthylèneglycol ou encore la 2-pyrrolidone, la N-méthyl-2-pyrrolidone, la N-éthylpyrrolidone, la N-vinylpyrrolidone, la 1,3-diméthylimidazolidone, le diméthylacétamide et le diméthylformamide.

6. Utilisation des compositions pigmentaires selon la revendication 1 en tant qu'encres d'impression pour l'impression par jet d'encre.
